Europäisches Patentamt

European Patent Office

Office européen des brevets

(11) Numéro de publication: **0 343 081**
**A1**

## (12) DEMANDE DE BREVET EUROPEEN

(21) Numéro de dépôt: **89401382.0**

(22) Date de dépôt: **19.05.89**

(51) Int. Cl.4: **A 01 J 25/06**

(30) Priorité: **20.05.88 FR 8806764**

(43) Date de publication de la demande:
**23.11.89 Bulletin 89/47**

(84) Etats contractants désignés: **DE ES GB IT SE**

(71) Demandeur: **CORBLIN S.A.**
**Zone Industrielle des Richardets Rue du Ballon - BP 123**
**F-93162 Noisy le Grand Cédex (FR)**

(72) Inventeur: **Rouvio, Alain**
**141 rue de Coubron**
**F-93370 Montfermeil (FR)**

(74) Mandataire: **Jolly, Jean-Pierre et al**
**Cabinet BROT et JOLLY 83, rue d'Amsterdam**
**F-75008 Paris (FR)**

(54) **Perfectionnement aux cuves de caillage du lait.**

(57) L'invention concerne une cuve de caillage du lait, équipée d'un outil (11) de tranchage longitudinal en forme de grille, disposé suivant la section transversale de la cuve (10), ladite cuve et ledit outil étant aptes à être animés d'un mouvement relatif perpendiculairement à ladite section transversale.

Selon l'invention, l'outil (11) de tranchage longitudinal ne présente des parties en saillie que sur l'une de ses faces et la paroi d'extrémité (16) de la cuve tournée vers cette face présente un profil complémentaire de celle-ci, de manière que l'outil puisse s'appliquer étroitement contre la paroi en s'y imbriquant.

FIG. 3

EP 0 343 081 A1

# Description

## Perfectionnements aux cuves de caillage du lait.

La présente invention concerne des perfectionnements apportés aux cuves utilisées pour le caillage du lait. Elle concerne plus particulièrement les cuves de ce type équipées d'un système de tranchage du lait caillé, en vue de la préparation de fromages à pâte molle.

On sait que la réalisation de tels fromages à partir de lait comprend d'abord la formation dun coagulum (lait caillé) sous l'action de présure et de ferments lactiques.

Le coagulum obtenu est ensuite tranché en petits cubes d'une forme aussi régulière que possible, de façon à permettre une synérèse du caillé, au cours de laquelle du sérum est évacué des cubes de caillé. Cette synérèse peut être accélérée par un brassage du caillé, qui disloque périodiquement la masse des cubes et évite que ceux-ci ne s'agglomèrent

Le sérum extrait est ensuite évacué et le mélange restant de caillé et de sérum est transféré dans des moules.

Le caillage du lait, de même que les opérations de tranchage et de brassage sont avantageusement conduites dans des cuves de forme semi-cylindriques.

Dans les fromageries, l'opération de tranchage du caillé présente une importance primordiale, tant sur le plan du rendement qu'en ce qui concerne la qualité des produits. En effet, de la régularité de la dimension des cubes de coagulum dépend l'homogénéité du produit fabriqué et, par conséquent, sa qualité. Par ailleurs, la formation de particules fines du caillé, qui ne sont pas retenues dans les moules et sont éliminées avec le sérum, doit être limitée, dans toute la mesure du possible, au cours de l'opération du tranchage.

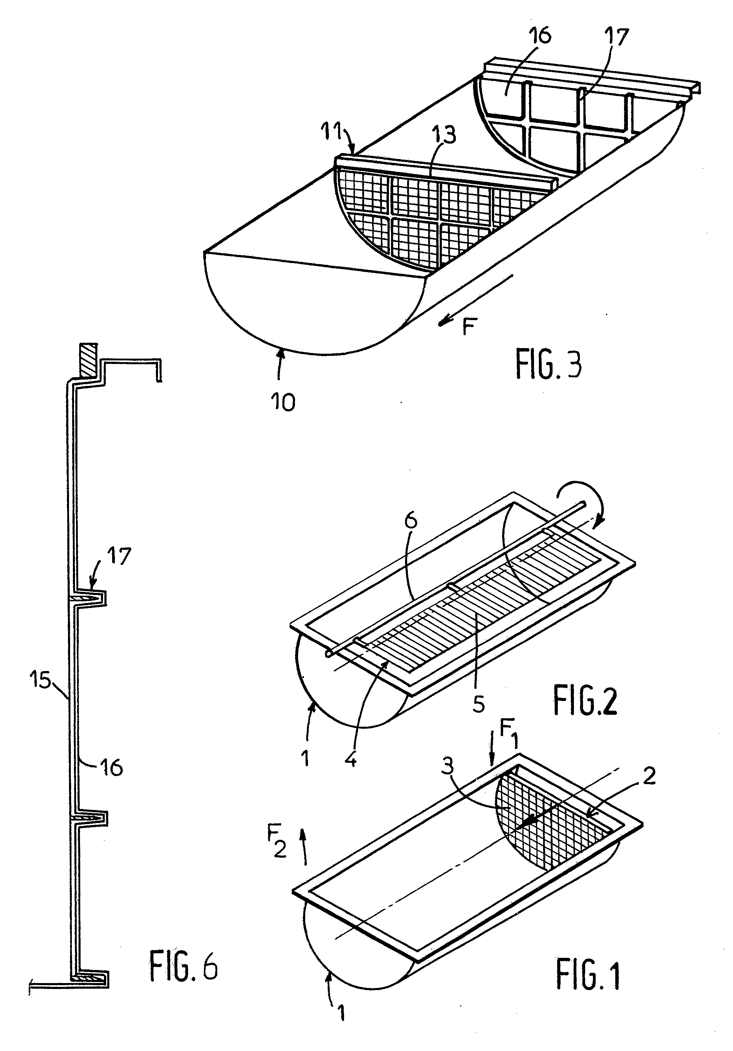

L'opération de tranchage du coagulum, telle que pratiquée dans la technique antérieure, est illustrée par les figures 1 et 2 des dessins annexés. Sur ces dessins, auxquels on se référera également ci-après dans la description d'une forme de mise en oeuvre de l'invention:

La figure 1 illustre le mode usuel de tranchage longitudinal du caillé ;

La figure 2 illustre l'opération connue de tranchage transversal ;

La figure 3 est une vue schématique de la cuve conforme à l'invention ;

La figure 4 est une vue en élévation de l'une des parois d'extrémité de cette cuve.

La figure 5 est une vue en élévation de l'outil de tranchage longitudinal ;

La figure 6 est une coupe verticale de l'une des parois d'extrémité de la cuve, avec l'outil de tranchage longitudinal appliqué contre cette partie.

Comme on le voit sur les figures 1 et 2, on utilise dans la technique antérieure des cuves semi-cylindriques 1 pour procéder au caillage du lait. Ces cuves sont fixes en position, et, pour procéder au tranchage du coagulum, on introduit d'abord verticalement dans la cuve, à l'une de ses extrémités (voir figure 1) un outil 2 de forme circulaire, comprenant une grille formée de lames 3 perpendiculaires, que l'on déplace longitudinalement dans la cuve pour l'en extraire à l'autre extrémité. Pour procéder au tranchage transversal du coagulum, on amène ensuite au-dessus de la cuve un outil comprenant une grille 4 de lames 5 parallèles, perpendiculaires à l'axe de la cuve, cette grille étant solidaire d'un arbre 6 que l'on amène sensiblement en coïncidence avec l'axe de la cuve (Figure 2). Il suffit alors de faire pivoter cet arbre de 180° pour trancher transversalement le caillé dans toute sa masse.

Il est clair que, pour obtenir des cubes de forme régulière, il faut utiliser des éléments de coupe aussi minces que possible et que des lames ne répondent pas parfaitement à cet impératif. Par ailleurs, l'introduction de l'outil 2 de tranchage longitudinal et son extraction de la cuve 1 suivant les flèches $F_1$ et $F_2$ brisent le caillé en particules fines, qui se traduisent par des pertes importantes.

La présente invention vise à remédier à ces inconvénients en proposant une cuve équipée d'un outil de tranchage longitudinal, qui puisse demeurer dans la cuve avant et après l'opération de tranchage et qu'il n'est donc pas nécessaire d'introduire dans celle-ci ou de l'en extraire, avec les risques d'endommagement du caillé qui en résultent.

L'invention a également pour but de proposer une cuve de ce type, dans laquelle l'outil de tranchage peut demeurer, même après tranchage du caillé, sans risquer d'interférer avec un outil du tranchage transversal d'un type usuel.

L'invention a enfin pour but de proposer une cuve de ce type dans laquelle les éléments de coupe sont constitués en majeure partie par de simples fils tendus, en vue d'obtenir une parfaite régularité de découpe et de limiter la formation de particules fines.

A cet effet, l'invention a pour objet une cuve de caillage du lait, équipée d'un outil de tranchage longitudinal en forme de grille, disposé suivant la section transversale de la cuve, ladite cuve et ledit outil étant aptes à être animés d'un mouvement relatif perpendiculairement à ladite section transversale, cette cuve étant caractérisée en ce que ledit outil de tranchage longitudinal ne présente des parties en saillie que sur l'une de ses faces et en ce que la paroi d'extrémité de la cuve tournée vers cette face présente un profil complémentaire de celle-ci, de manière que l'outil puisse s'appliquer étroitement contre la paroi en s'y imbriquant.

Le mouvement relatif de la cuve et de cet outil sera tel que l'outil se rapproche de cette paroi et qu'en fin de mouvement, l'outil soit appliqué contre cette paroi. Il sera ainsi possible de procéder au tranchage longitudinal du caillé dans la cuve, en y maintenant en position l'outil de tranchage, sans avoir à l'y introduire ou à l'en extraire et, par conséquent, sans produire à partir du caillé des particules fines nuisibles au rendement du procédé. L'outil de tranchage pourra être déplacé d'une extrémité de la cuve jusqu'à l'extrémité de profil complémentaire. Il pourra par exemple être entraîné par des vérins sans tige, magnétiques, disposés latéralement par rapport à la cuve, ou par des chariots montés coulissants sur des organes de guidage disposés latéralement et aptes à se déplacer sous la sollicitation de moyens moteurs tels que des courroies.

L'outil de tranchage pourra aussi être fixé en position, la cuve étant alors déplacée sur un support par rapport à cet outil.

Avantageusement, cet outil de tranchage sera constitué d'une armature rigide sur laquelle seront tendus des fils métalliques perpendiculaires entre eux et définissant une grille. C'est l'armature métallique qui définira sur l'une des faces de cette grille des parties en saillie et c'est cette armature qui viendra s'escamoter dans les évidements de forme complémentaire de l'extrémité associée de la cuve. Cette armature pourra naturellement présenter des arêtes effilées formant lames, tournées vers la face de profil complémentaire de l'extrémité de la cuve.

Une telle forme de réalisation de l'invention va maintenant être décrite, à titre d'exemple non limitatif, en référence aux figures 3 à 6 des dessins annexés.

Comme on le voit sur ces dessins, la cuve 10 a encore une forme semi-cylindrique et l'outil de tranchage longitudinal 11 a un profil correspondant sensiblement à la section transversale de cette cuve.

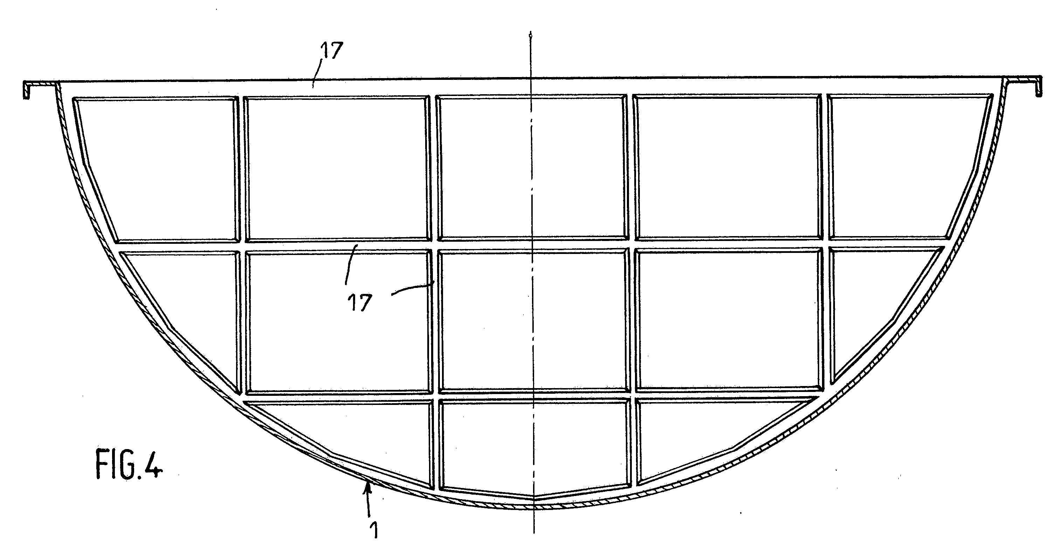

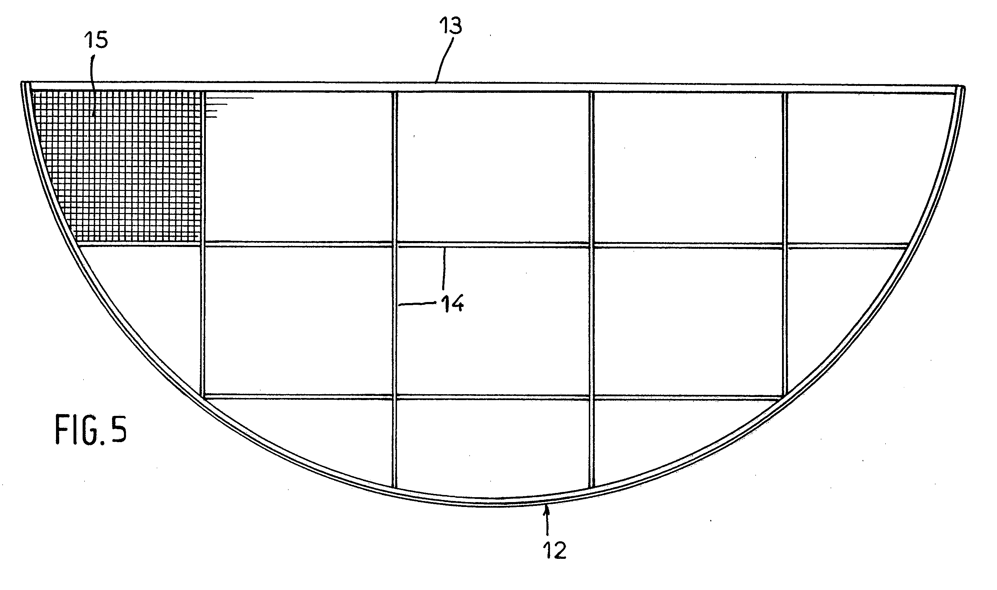

L'outil 11 comprend une armature périphérique 12 (voir Figure 5) en forme de lame rigide, solidaire d'une entretoise 13 émergeant de la cuve. Des lames rigides 14, perpendiculaires entre elles et régulièrement espacées, réunissent des parties opposées de cette armature, ainsi que cette armature et l'entretoise 13. D'un côté de l'armature 12, de l'entretoise 13 et des lames 14 est tendu en fin grillage de fils métalliques 15, perpendiculaires entre eux et régulièrement espacés d'une distance correspondant à la dimension des cubes de caillé que l'on désire réaliser. Sur l'autre face de ce grillage, les lames 12 et 13 font saillie en direction d'une paroi d'extrémité 16 de la cuve 10, dans laquelle sont ménagés des évidements 17 de forme complémentaire (Figure 4). Ces évidements sont destinés à recevoir les lames, en fin de course soit de l'outil 11, soit de la cuve 1. Dans la pratique, les cuves sont habituellement déplacées par des convoyeurs continus. Avantageusement, l'outil 11 sera donc fixe en position et c'est la cuve qui sera déplacée suivant la flèche F, de manière à rapprocher la paroi 16 de l'outil 11.

Comme on le voit sur la figure 6, les lames 12 et 13 peuvent ainsi s'engager dans les évidements 17 et la grille de fils métalliques 15 venir s'appliquer étroitement contre la paroi 16 de la cuve, sans aucune partie en saillie vers l'extérieur de celle-ci. Il est donc possible de laisser l'outil 11 à l'intérieur de la cuve 10, après le tranchage longitudinal du caillé, pendant les opérations de tranchage transversal et de brassage, sans que les outils utilisés dans ce but risquent d'interférer avec l'outil 11. Il n'est donc pas nécessaire de retirer celui-ci en fin de tranchage longitudinal et, comme il peut également être présent dans la cuve à l'autre extrémité de celle-ci avant la phase de caillage du lait, on évite ainsi les opérations d'introduction et de retrait de l'outil dans le caillé, qui le brise en fines particules et sont la cause d'un rendement médiocre, ces particules étant évacuées avec le sérum sans pouvoir être récupérées.

L'invention apporte donc des moyens simples et faciles à mettre en oeuvre pour effectuer le tranchage longitudinal du caillé dans des conditons optimum de rendement et de régularité.

**Revendications**

1.- Cuve de caillage du lait, équipée d'un outil (11) de tranchage longitudinal en forme de grille, disposé suivant la section transversale de la cuve (10), ladite cuve et ledit outil étant aptes à être animés d'un mouvement relatif perpendiculairement à ladite section transversale, cette cuve étant caractérisée en ce que ledit outil (11) de tranchage longitudinal ne présente des parties en saillie (12, 14) que sur l'une de ses faces et en ce que la paroi d'extrémité (16) de la cuve tournée vers cette face présente un profil complémentaire de celle-ci, de manière que l'outil puisse s'appliquer étroitement contre la paroi en s'y imbriquant.

2.- Cuve selon la revendication 1, caractérisée en ce que ladite cuve (1) est fixe en position, tandis que l'outil de tranchage (11) est mobile en direction de ladite face (17).

3.- Cuve selon la revendication 1, caractérisée en ce que l'outil de tranchage (11) est fixe, tandis que la cuve (1) peut être déplacée de manière à rapprocher ladite paroi (16) en direction dudit outil.

4.- Cuve selon l'une des revendications 1 à 3, caractérisée en ce que l'outil (11) comprend, d'une part, une armature rigide (12, 13, 14) définissant lesdites parties en saillie sur l'une des faces de l'outil (11) et, d'autre part, des fils métalliques régulièrement espacés et perpendiculaires entre eux, disposés sur l'autre face de ladite armature de manière à former une grille.

5.- Cuve selon la revendication 4, caractérisé en ce que les parties en saillie (12, 14) de ladite armature ont un profil de lame tournée vers la paroi d'extrémité (16) de profil complémentaire.

FIG.3

FIG.2

FIG.6

FIG.1

FIG.4

EP 0 343 081 A1

FIG.5

EP 0 343 081 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | FR-A-1440383 (HOLVRIEKA N.V.)<br>* le document en entier *<br>--- | 1 | A01J25/06 |
| A | GB-A-780606 (KRAFT FOODS COMPANY)<br>* page 4, lignes 98 - 111; figure 8 *<br>--- | 1 | |
| A | US-A-3744405 (F.A. LOTCHINGER)<br>----- | | |

| | |
|---|---|
| | **DOMAINES TECHNIQUES RECHERCHES (Int. Cl.4 )** |
| | A01J |

**Le présent rapport a été établi pour toutes les revendications**

| Lieu de la recherche | Date d'achèvement de la recherche | Examinateur |
|---|---|---|
| LA HAYE | 22 AOUT 1989 | NEHRDICH H.J |